# EUROPÄISCHE PATENTANMELDUNG

(11) **EP 0 673 943 A1**
(43) Veröffentlichungstag der Anmeldung: **27.09.1995**
(21) Anmeldenummer: 95103482.6
(22) Anmeldetag: 10.03.1995
(51) Int. Cl.: C07F 9/177, C10M 137/10

(54) **Metallfreie Dithiophosphorsäurederivate**

(30) Priorität: 23.03.1994 DE 4409961
(71) Anmelder: RHEIN-CHEMIE RHEINAU GmbH, 68219 Mannheim (DE)
(72) Erfinder: Jäger, Günter, Prof. Dr., D-06632 Freyburg (DE); Dimmig, Thomas, Dr., D-07745 Jena (DE); Radig, Wolfram, D-99518 Bad Sulza (DE); Schäfer, Volker, Dr., D-67122 Altrip (DE); Braun, Jürgen, Dr., D-67346 Speyer (DE); Pauli, Alfred, Dr., D-69207 Sandhausen (DE)
(74) Vertreter: Gremm, Joachim, Dr.

(57) **Zusammenfassung**

Metallfreie Dithiophosphorsäureadditionsprodukte aus mono- oder polycyclischen ein- oder mehrfach ungesättigten Kohlenwasserstoffen und Alkyl- bzw. Alkyl/-Aryldithiophosphorsäuren, ein Verfahren zur ihrer Herstellung und ihre Verwendung als Schmierstoffadditive.

## Beschreibung

Die Erfindung betrifft metallfreie Umsetzungsprodukte von Alkyl- oder Arylalkylthiophosphorsäuren und mono- oder polycyclischen ein- oder mehrfach ungesättigten Kohlenwasserstoffen, ein Verfahren zur ihrer Herstellung und ihre Verwendung als Additiv zu Schmierstoffen.

Zur Eigenschaftsverbesserung von mineralischen Schmierölen, besonders zur Optimierung des Verschleißschutzes und der Alterungsstabilität, werden schon seit langem Metalldithiophosphate eingesetzt, wobei sich Zinkdithiophosphate als besonders geeignet erwiesen haben. Allerdings können Metalldithiodiphosphate, sogenannte Aschebildner, zu störenden Ablagerungen auf den geschmierten Reibelementen führen. Bedingt durch ihren Gehalt an Metallionen stören sie den biologischen Abhau von legierten Schmierstoffen.

Sogenannte aschefreie, d.h. metallfreie Dithiophosphate, erhält man durch Addition von Dithiophosphorsäuren an epoxidierte ungesättigte cyclische Kohlenwasserstoffe. Diese Umsetzung ist in vielen Fällen unvollständig; der Einsatz der Umsetzungsprodukte als Schmierstoffadditiv ist wegen eingeschränkter Öllöslichkeit und Verschlechterung der Alterungsbeständigkeit des Schmierstoffes ausgeschlossen. Bekannt sind dagegen Additionsprodukte von Aryldithiophosphorsäuren an Cyclopentadien, die nur in Kombination mit aschebildenden Zinkdithiophosphaten Verwendung finden (EP-A 0 393 768).

Es besteht somit Bedarf an metallfreien Dithiophosphorsäurederivaten, die sowohl in den üblichen Basisölen für Schmierstoffe löslich sind, als auch deren

Verschleißschutz und Alterungsstabilität verbessern, also an Produkten, die sowohl aschefrei, als auch in ihrer Wirkung mindestens genau so gut wie die Zinkdithiophosphate sind.

Gegenstand der Erfindung sind Additionsprodukte aus mono- oder polycyclischen ein- oder mehrfach ungesättigten Kohlenwasserstoffen und Dithiophosphorsäurederivaten der Formel (I) 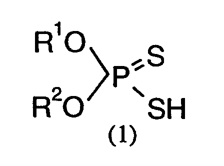
worin
R¹C₁-C₁₂-Alkyl oder C₆-C₁₀-Aryl und
R²C₁-C₁₂-Alkyl
bedeuten.

Beispiele für Dithiophosphorsäurederivate sind:
Diethyldithiophosphorsäure, Di(2-ethylhexyl)dithiophosphorsäure, Benzyl-(2-ethylhexyl)dithiophosphorsäure, Ethyl-Benzyldithiophosphorsäure.

Geeignete mono- oder polycyclische ein- oder mehrfach ungesättigter Kohlenwasserstoffe sind z.B. Cyclopentadien, Dicyclopentadien, Norbornen, Norbornadien, Limonen.

Besonders geeignet sind Umsetzungsprodukte aus Cyclopentadien und Di-(2-ethylhexyl)-dithiophosphorsäure, Cyclopentadien und Diethyldithiophosphorsäure sowie Limonen und Di-(2-ethylhexyl)-dithiophosphorsäure.

Ein weiterer Gegenstand der Erfindung ist ein Verfahren zur Herstellung dieser Dithiophosphorsäureadditionsprodukte, in welchem man zu dem mono- oder polycyclischen ein- oder mehrfach ungesättigten Kohlenwasserstoff, das Dithiophosphorsäurederivat in äquimolarer Menge zu den reaktiven Doppelbindungen mit einer solchen Geschwindigkeit zufügt, daß durch die exotherme chemische Reaktion eine Temperatur von 30 bis 50°C eingestellt wird. Bevorzugt wird die reagierende Flüssigkeit während der Reaktion ständig durchmischt. Das erhaltene Umsetzungsprodukt kann direkt weiterverarbeitet werden.

Ebenfalls Gegenstand der Erfindung ist die Verwendung des erfindungsgemäßen Umsetzungsproduktes als Schmierstoff, bevorzugt Schmieröladditiv. Es wird im allgemeinen in Mengen von 0,1 bis 5 % angewendet und besitzt die gleichen oder bessere verschleißschützende und alterungsstabilisierende Eigenschaften wie Metalldithiophosphate. Es übertrifft damit die bisher bekannten metallfreien Dithiophosphorsäurederivate in dieser Eigenschaft ganz erheblich und ist zudem aschefrei und biologisch abbaubar.

### Beispiel 1

In einem 1 000 ml-Dreihalskolben mit Rückflußkühler, Innenthermometer und Rührer werden 1,5 mol Dicyclopentadien vorgelegt und auf 40-50°C erhitzt. Dann werden 1,5 mol Di-(2-ethylhexyl)-dithiophosphorsäure mit einer solchen Geschwindigkeit zugetropft, daß die Innentemperatur nicht über 50°C ansteigt. Nach Ende der Zugabe der Dithiophosphorsäure läßt man noch 90 min bei ca. 50°C nachreagieren.

Das Reaktionsprodukt ist eine helle, klare, ölige Flüssigkeit,. die 13,17 Gew.-% Schwefel und 6,38 Gew.-% Phosphor enthält und bei 40°C eine Viskosität von 39,5 mm²/s besitzt. Das Produkt ist direkt als Schmieröladditiv anwendbar. Die folgende Tabelle zeigt das Ergebnis der Prüfung.

| | Prüfmethoden | |
|---|---|---|
| | VKA-Verschleißtest (DIN 51350, Teil 3) Kalottendurchmesser [mm] | Rotationsbombentest (ASTM-D 2272) Standzeit [min] |
| unlegiertes Mineralöl | 1,0 | 30 |
| 0,4 Gew.-% Produkt in Mineralöl | 0,35 | 143 |
| 1,0 Gew.-% Produkt in Mineralöl | 0,35 | 165 |

## Patentansprüche

1. Additionsprodukte aus mono- oder polycyclischen ein- oder mehrfach ungesättigten Kohlenwasserstoffen und Dithiophosphorsäurederivaten der Formel (I) 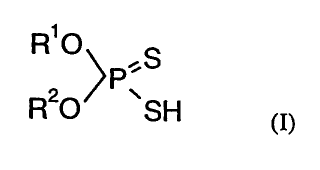 worin
R¹ C₁-C₁₂-Alkyl oder C₆-C₁₀-Aryl und
R² C₁-C₁₂-Alkyl
bedeuten.

2. Verfahren zur Herstellung der Additionsprodukte gemaß Anspruch 1, dadurch gekennzeichnet, daß man zu einem mono- oder polycyclischen ein- oder mehrfach ungesättigten Kohlenwasserstoff, das Dithiophosphorsäurederivat der Formel (I) in äquimolarer Menge zu den reaktiven Doppelbindungen mit einer solchen Geschwindigkeit zugibt, daß durch die exotherme chemische Reaktion eine Temperatur von 30 bis 50°C eingestellt wird.

3. Verwendung der Additionsprodukte gemaß Anspruch 1 als Schmierstoffadditiv.
